# EUROPEAN PATENT SPECIFICATION

(11) **EP 4 403 490 B1**
(45) Date of publication and mention of the grant of the patent: **29.04.2026**
(21) Application number: 22869838.7
(22) Date of filing: 02.09.2022
(51) Int. Cl.: G05D 1/00, B65G 1/00

(54) **LOAD COLLAPSE DETECTION DEVICE FOR AUTOMATIC CONVEYANCE APPARATUS AND LOAD COLLAPSE DETECTION METHOD FOR AUTOMATIC CONVEYANCE APPARATUS**
LASTZUSAMMENBRUCHDETEKTIONSVORRICHTUNG FÜR AUTOMATISCHE FÖRDERVORRICHTUNG UND LASTZUSAMMENBRUCHDETEKTIONSVERFAHREN FÜR AUTOMATISCHE FÖRDERVORRICHTUNG
DISPOSITIF DE DÉTECTION D'EFFONDREMENT DE CHARGE POUR UN APPAREIL DE TRANSPORT AUTOMATIQUE ET PROCÉDÉ DE DÉTECTION D'EFFONDREMENT DE CHARGE POUR UN APPAREIL DE TRANSPORT AUTOMATIQUE

(30) Priority: 15.09.2021 JP 2021150349
(43) Date of publication of application: 24.07.2024
(73) Proprietor: Amada Co., Ltd., Isehara-shi, Kanagawa 259-1196 (JP)
(72) Inventor: TOMIMATSU Atsushi, Isehara-shi, Kanagawa 259-1196 (JP); NARAHARA Akio, Isehara-shi, Kanagawa 259-1196 (JP); KITAMURA Chiaki, Isehara-shi, Kanagawa 259-1196 (JP)
(74) Representative: Grünecker Patent- und Rechtsanwälte PartG mbB
(86) International application number: PCT/JP2022/033158
(87) International publication number: WO 2023/042691

(56) References cited:
- JP-A- 2007 269 452
- JP-A- 2014 186 693
- JP-A- 2019 131 392
- JP-A- 2019 147 649
- JP-A- 2021 086 196
- US-A1- 2020 319 638
- US-B1- 9 990 853

## Description

### [TECHNICAL FIELD]

The present disclosure relates to a load collapse detection device and a load collapse detection method for an automated guided vehicle.

### [BACKGROUND ART]

In facilities such as many factories and warehouses, the operation of carrying products and loads is performed using an automated guided vehicle (AGV), which is a vehicle that travels autonomously. By performing the carrying operation using an automated guided vehicle, time and costs for workers can be reduced, and operation efficiency can be improved.

When an automated guided vehicle onto which a load is loaded is traveling, if a load collapse due to vibration or the like occurs and the load falls from the automated guided vehicle, there is a possibility of the fallen load and the automated guided vehicle or another automated guided vehicle coming into contact with each other and both being damaged. Therefore, when a load collapse occurs while the automated guided vehicle is traveling, it is necessary to perform processing for quickly detecting the load collapse, stopping the automated guided vehicle, and resuming normal travel. JP 2007 269452 relates to a safety device for an unmanned fork lift used to transfer baggage, enabling to detect obstacles placed on the floor.

### [Citation List]

### [Patent Literature]

[Patent Literature 1] Japanese Patent No. 4803049

### [SUMMARY OF THE INVENTION]

There is a system in which a photoelectric sensor is installed at a position where a load is loaded of an automated guided vehicle to detect load collapses that occur while the automated guided vehicle is travelling, and falling of the loaded load is detected based on a detection result produced by the photoelectric sensor (see Patent Literature 1).

However, in order to use this technology, it is necessary to newly install a photoelectric sensor for detecting falling of a load in an automated guided vehicle, and therefore, there has been a problem that time and costs are required.

One aspect of the present disclosure is a load collapse detection device in an automated guided vehicle and a load collapse detection method of an automated guided vehicle, which can accurately detect the collapse of a load loaded onto an automated guided vehicle by performing simple processing.

The invention is defined by the scope of the appended independent claims.

### [BRIEF DESCRIPTION OF THE DRAWINGS]

Fig. 1 is an external perspective view of automated guided vehicles 1A and 1B of first and second embodiments.
Fig. 2 is a block diagram showing the configuration of the automated guided vehicle 1A of the first embodiment.
Fig. 3 is a diagram in which an object detection range C1 of an object detection sensor 10-1 and an object detection range C2 of an object detection sensor 10-2 of the automated guided vehicle 1A according to the first embodiment are viewed from above.
Fig. 4 is a diagram in which a load collapse detection range E and obstacle detection ranges F1 and F2 of which information is stored by a detection range information storage unit 40 of the automated guided vehicle 1A according to the first embodiment are viewed from above.
Fig. 5 is a flowchart showing the operation of the automated guided vehicle 1A of the first embodiment.
Fig. 6A is a diagram in which a state is viewed from above in which an object X is detected in the obstacle detection range F1 while the automated guided vehicle 1A of the first embodiment is traveling.
Fig. 6B is a diagram in which a state is viewed from above in which an object Y is detected in the load collapse detection range E while the automated guided vehicle 1A of the first embodiment is travelling.
Fig. 7 is a block diagram showing the configuration of the automated guided vehicle 1B of the second embodiment.
Fig. 8 is a flowchart showing the operation of the automated guided vehicle 1B of the second embodiment.
Fig. 9A is a diagram in which a state is viewed from above in which a load collapse detection range is updated when the automated guided vehicle 1B of the second embodiment accelerates in the front direction.
Fig. 9B is a diagram in which a state is viewed from above in which a load collapse detection range is updated when the automated guided vehicle 1B of the second embodiment decelerates while traveling.
Fig. 10A is a diagram in which a state is viewed from above in which a load collapse detection range is updated when the automated guided vehicle 1B of the second embodiment turns in the left direction.
Fig. 10B is a diagram in which a state is viewed from above in which a load collapse detection range is updated when the automated guided vehicle 1B of the second embodiment turns in the right direction.
Fig. 11A is a diagram in which a state is viewed from above in which a load collapse detection range is updated when the automated guided vehicle 1B of the second embodiment is traveling with a long load loaded thereon.
Fig. 11B is a diagram in which a state is viewed from above in which a load collapse detection range is updated when the automated guided vehicle 1B of the second embodiment is traveling with a small load loaded thereon.
Fig. 12 is a diagram in which a state is viewed from above in which a load collapse detection range is updated when the automated guided vehicle 1B of the second embodiment is traveling while the center of gravity of a load loaded thereon is biased in the front direction.
Fig. 13A is an explanatory diagram showing a dome-shaped object detection range implemented by an object detection sensor 10-3 installed at one upper end of each of the automated guided vehicles 1A and 1B.
Fig. 13B is an explanatory diagram showing a planar object detection range implemented by an object detection sensor 10-4 installed at one upper end of each of the automated guided vehicles 1A and 1B.
Fig. 13C is an explanatory diagram showing fan-shaped object detection ranges implemented by object detection sensors 10-5 installed on all four side surfaces of each of the automated guided vehicles 1A and 1B.

### [MODES FOR CARRYING OUT THE INVENTION]

### <<First embodiment>>

### <Configuration of automated guided vehicle according to first embodiment>

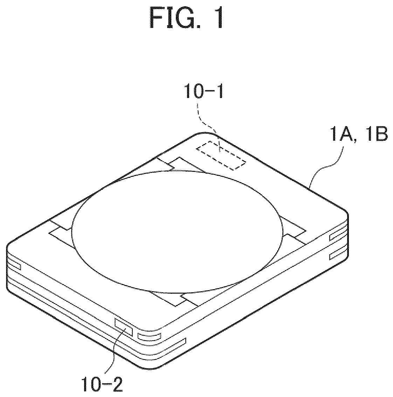

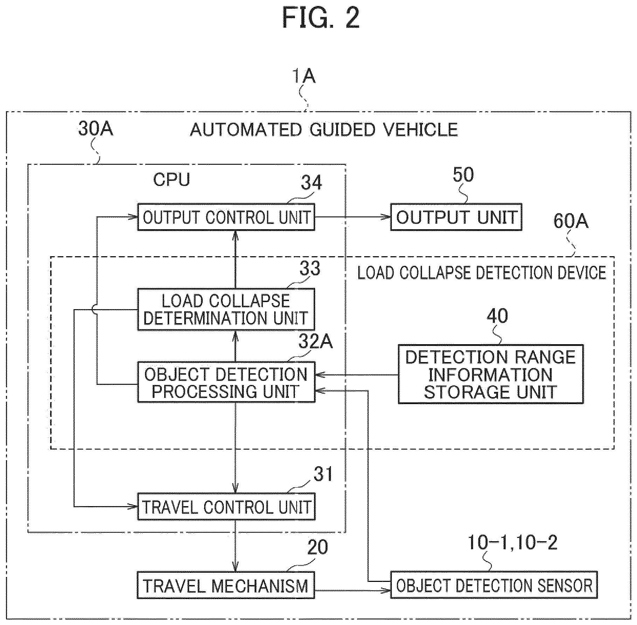

The configuration of an automated guided vehicle (AGV) according to a first embodiment will be described below with reference to the accompanying diagrams. Fig. 1 is an external perspective view of an automated guided vehicle 1A according to the first embodiment, and Fig. 2 is a block diagram showing the configuration of the automated guided vehicle 1A.

In a sheet metal processing facility in which a plurality of sheet metal processing apparatuses (not shown) are installed, loads such as parts and products to be processed are loaded onto the automated guided vehicle 1A and the vehicle carries the loads.

As shown in Fig. 2, the automated guided vehicle 1A includes object detection sensors 10-1 and 10-2, a travel mechanism 20, a central processing unit (CPU) 30A, a detection range information storage unit 40, and an output unit 50. The object detection sensors 10-1 and 10-2 are sensors that detect objects in a periphery of the automated guided vehicle 1A, and, for example, light detection and ranging (LiDAR) sensors mounted in advance in the automated guided vehicle 1A so that the vehicle performs automatic operations can be used for the object detection sensors. The object detection sensor 10-1 is installed at a front position of the automated guided vehicle 1A relative to the traveling direction thereof to detect objects in the region in front of the automated guided vehicle 1A, and the object detection sensor 10-2 is installed at a rear position of the automated guided vehicle 1A relative to the traveling direction thereof to detect objects in the region behind the automated guided vehicle 1A. The object detection sensors 10-1 and 10-2 detect two-dimensional or three-dimensional positions of objects relative to the automated guided vehicle 1A.

The travel mechanism 20 is a mechanism for causing the automated guided vehicle 1A to travel, and includes, for example, three or more wheels that support the automated guided vehicle 1A and can be rotated on the road surface, a driving source such as a motor for rotating and driving the wheels, a powertrain for transmitting the driving force of the driving source to the wheels, and a steering mechanism for controlling the traveling direction of the automated guided vehicle 1A. The output unit 50 is a communication device for sounding an alarm and transmitting information to another automated guided vehicle (not shown), or the apparatuses in the sheet metal processing facility and a management device (not shown) for managing the automated guided vehicle. The output unit 50, for example, can perform wireless communication via a wireless local area network (LAN) of the IEEE 802.11 standard or mobile communication.

The CPU 30A includes a travel control unit 31, an object detection processing unit 32A, a load collapse determination unit 33, and an output control unit 34. The travel control unit 31 controls the travel mechanism 20. The output control unit 34 controls the output of information to the output unit 50. Further, the object detection processing unit 32A, the load collapse determination unit 30, and the detection range information storage unit 40 constitute a load collapse detection device 60A. Each of the components (31, 32A, 33, and 34) of the CPU 30A can be realized using a general-purpose microcomputer. Specifically, a dedicated computer program is installed on the microcomputer for execution. This enables the general-purpose microcomputer to function as a plurality of information processing units (31, 32A, 33, and 34). Here, an example implementation by means of a dedicated computer program and general-purpose microcomputer is shown, but it is needless to say that dedicated hardware for performing each piece of information processing can be prepared instead of a general-purpose microcomputer. Dedicated hardware includes devices such as application specific integrated circuits (ASICs) arranged to perform the functions described in the embodiments and conventional circuit components.

The load collapse detection device 60A is communicably connected to the object detection sensors 10-1 and 10-2, and includes the detection range information storage unit 40, the object detection processing unit 32A, and the load collapse determination unit 33. The detection range information storage unit 40 stores information indicating a load collapse detection range adjacent to the automated guided vehicle 1A, within a detection range implemented by the object detection sensors 10-1 and 10-2, and information indicating an obstacle detection range in a periphery of the load collapse detection range, within the detection range implemented by the object detection sensors 10-1 and 10-2. The object detection processing unit 32A acquires results of detection performed by the object detection sensors 10-1 and 10-2 while the automated guided vehicle 1A is travelling and detects objects in the load collapse detection range and objects in the obstacle detection range. The load collapse determination unit 33, when the object detection processing unit 32A detects the object in the load collapse detection range, determines whether the object has been detected in the obstacle detection range before being detected in the load collapse detection range, and determines that the object has fallen due to a load collapse when the object has not been detected in the obstacle detection range before being detected in the load collapse detection range. The detection range information storage unit 40 is, for example, a memory of a general-purpose microcomputer or an auxiliary storage device (including magnetic and optical disk drives) connected to the microcomputer.

### <Operation of automated guided vehicle 1A according to first embodiment>

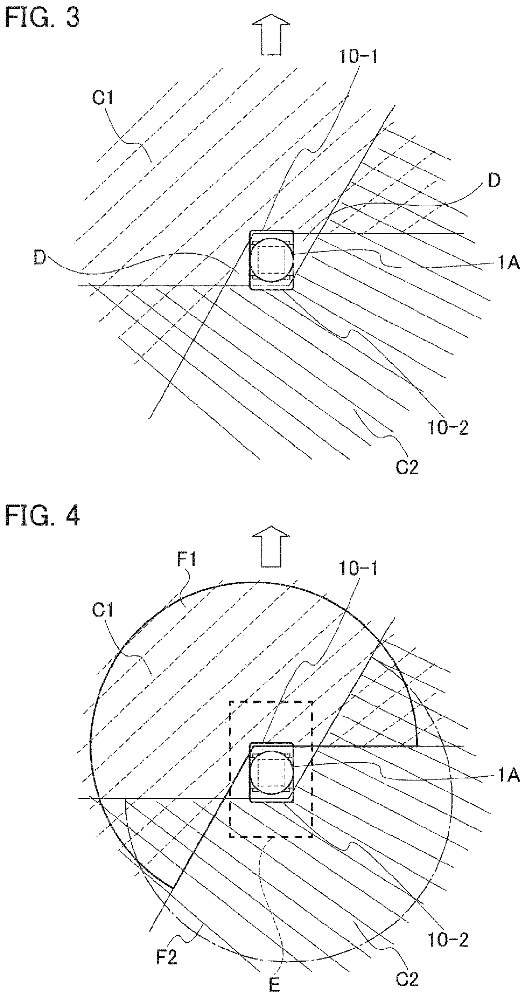

The object detection ranges of the object detection sensors 10-1 and 10-2 used in the present embodiment will be described below. Fig. 3 is a view in which an object detection range C1 of the object detection sensor 10-1 of the automated guided vehicle 1A and an object detection range C2 of the object detection sensor 10-2 of the automated guided vehicle 1A are viewed from above.

In the automated guided vehicle 1A traveling in the direction of the arrow, the object detection range C1 of the object detection sensor 10-1 is, for example, a fan-shaped region having a radius of 10 m and a detection range angle of about 240 degrees with the object detection sensor 10-1 as the center, and includes the front position and the left oblique rear position of the automated guided vehicle 1A. Further, the object detection range C2 of the object detection sensor 10-2 is, for example, a fan-shaped region having a radius of 10 m and a detection range angle of about 240 degrees with the object detection sensor 10-2 as the center, and includes the rear position and the right oblique front position of the automated guided vehicle 1A. Fig. 3 does not show detection limit lines (fan-shaped arcs) in the depth direction of the object detection range C1 and the object detection range C2.

By combining the object detection range C1 of the object detection sensor 10-1 and the object detection range C2 of the object detection sensor 10-2 set in this way, the entire horizontal periphery of the automated guided vehicle 1A can be set as the object detection range. At that time, slightly sized blind spots D occur on the left and right sides of the automated guided vehicle 1A, but since the object detection range C1 and the object detection range C2 also move in the traveling direction while the automated guided vehicle 1A is traveling, the regions of the blind spots D are immediately included in the object detection range C1 or the object detection range C2. Therefore, objects in the blind spots D are immediately detected by the object detection sensor 10-1 or the object detection sensor 10-2.

Further, in the present embodiment, information stored in advance by the detection range information storage unit 40 will be described. Fig. 4 is a view in which a load collapse detection range E and obstacle detection ranges F1 and F2 of which information is stored by the detection range information storage unit 40 of the automated guided vehicle 1A are viewed from above.

As shown by the dotted line in Fig. 4, the load collapse detection range E is a region adjacent to the automated guided vehicle 1A, and is, for example, a region within a predetermined distance (for example, 0.5 m) from the outer periphery of the automated guided vehicle 1A. Note that a load collapse detection range E as another example may surround the periphery of the automated guided vehicle 1A when viewed from above the automated guided vehicle 1A.

Further, an obstacle detection range F1 is a region in a periphery of the load collapse detection range E, and a predetermined region within the object detection range C1, for example, a region obtained by excluding the load collapse detection range E from a fan-shaped region having a radius of 3 m and a detection range angle of about 240 degrees with the object detection sensor 10-1 as the center. Further, the obstacle detection range F2 is a region in a periphery of the load collapse detection range E and is a predetermined region within the object detection range C2, for example, a region obtained by excluding the load collapse detection range E from a fan-shaped region having a radius of 3 m and a detection range angle of about 240 degrees with the object detection sensor 10-2 as the center. Here, the outer edges of the obstacle detection range F1 and the obstacle detection range F2 are set inside the detection limit lines in the depth direction of the object detection range C1 and the object detection range C2, but both may be aligned.

The obstacle detection ranges F1 and F2 are set to be sufficiently larger than the load collapse detection range E and are set such that, even if a person makes one large step toward the automated guided vehicle 1A from the outer periphery of the obstacle detection range F1 or F2, the person does not reach the load collapse detection range E.

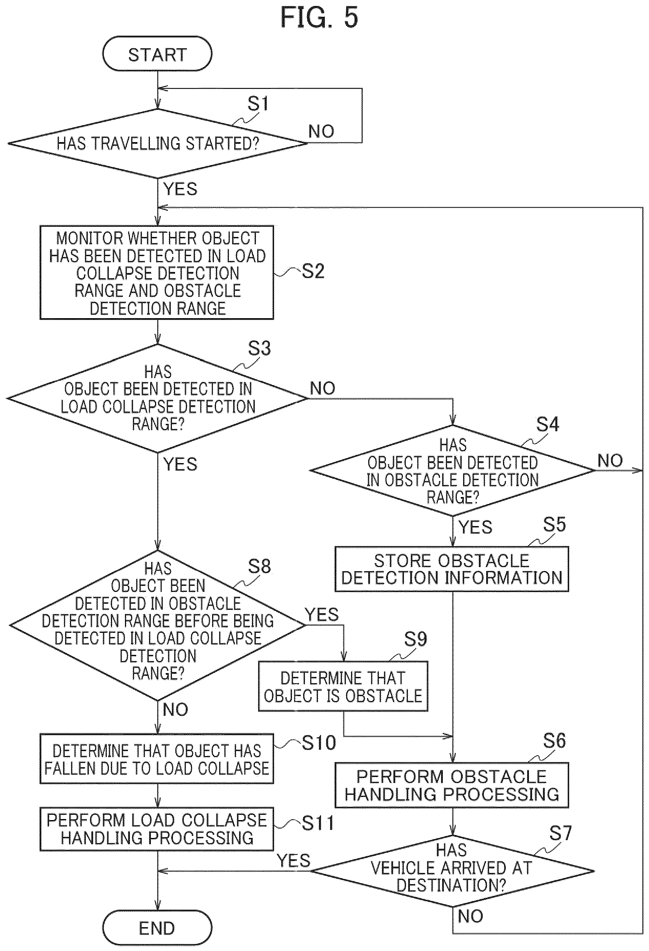

Fig. 5 is a flowchart showing the operation of the automated guided vehicle 1A of the first embodiment. When loads are loaded onto the automated guided vehicle 1A and the vehicle starts traveling to a predetermined destination by the travel control unit 31 controlling the travel mechanism 20 ("YES" in S1), the object detection sensor 10-1 starts processing of detecting objects in the object detection range C1, and the object detection sensor 10-2 starts processing of detecting objects in the object detection range C2.

After the object detection sensors 10-1 and 10-2 start the processing of detecting objects, the object detection processing unit 32A acquires information on detection results thereof, and monitors, based on information stored in the detection range information storage unit 40, whether an object has been detected in the load collapse detection range E and the obstacle detection ranges F1 and F2 (S2).

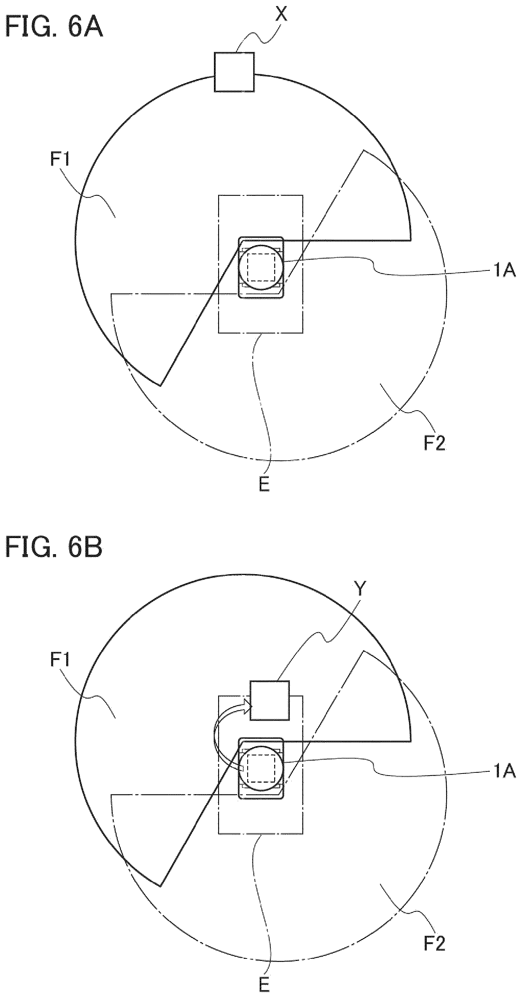

When an object has not been detected in the load collapse detection range E ("NO" in S3) and an object X has been detected in the obstacle detection range F1 or F2 ("YES" in S4), the object detection processing unit 32A recognizes the object X as an obstacle and stores information on the detection of the obstacle (S5). The information on the detection of the obstacle includes information on a detection position of the obstacle in the obstacle detection range F1 or F2, shape information of the obstacle, and the like. Fig. 6A is a view in which a state when the object X is detected in the obstacle detection range F1 while the automated guided vehicle 1A is travelling is viewed from above.

When detecting the object X as an obstacle in the obstacle detection range F1, the object detection processing unit 32A performs obstacle handling processing (S6). Examples of the obstacle handling processing include, for example, processing for causing the output unit 50 to sound an alarm notifying that the automated guided vehicle 1A may come into contact with the obstacle, by means of control performed by the output control unit 34, processing for changing the travel route such that the automated guided vehicle 1A does not come into contact with the obstacle, by means of control performed by the travel control unit 31, and the like.

After performing the obstacle handling processing, when the automated guided vehicle 1A has not yet arrived at the destination ("NO" in S7), the processing returns to step S2, and processing in steps S4 to S7 is repeated until an object is detected in the load collapse detection range E ("NO" in S3). By repeating the processing, position information of the object X detected in the obstacle detection ranges F1 and F2 is stored over time, and a specific object X can be tracked.

When an object is detected in the load collapse detection range E ("YES" in S3), the load collapse determination unit 33 determines whether the object has been detected in the obstacle detection range F1 or F2 before being detected in the load collapse detection range E (S8). Fig. 6B is a view in which a state when an object Y is detected in the load collapse detection range E while the automated guided vehicle 1A is travelling is viewed from above.

Here, the load collapse determination unit 33 determines that "the object Y has been detected in the obstacle detection range F1 or F2 before being detected in the load collapse detection range E" when information indicating having been detected and tracked in the obstacle detection range F1 or F2 is stored in the object detection processing unit 32A with respect to the object Y detected in the load collapse detection range E.

Suppose that the load collapse determination unit 33 determines that "the object Y has been detected in the obstacle detection range F1 or F2 before being detected in the load collapse detection range E" ("YES" in S8), that is, suppose that the object Y has entered the load collapse detection range E via the obstacle detection range F1 or F2. In the above case, the load collapse determination unit 33 determines that the object Y is not a load that has collapsed from the loads loaded onto the automated guided vehicle 1A but is an obstacle that was present on the travel route (S9). When the load collapse determination unit 33 determines that the object Y is an obstacle, the processing proceeds to step S6 and the obstacle handling processing is performed (S6). If the automated guided vehicle 1A has not arrived at the destination ("NO" in S7), the processing returns to step S2.

In step S8 described above, when information indicating having been detected and tracked in the obstacle detection range F1 or F2 is not stored in the object detection processing unit 32A ("NO" in S8) with respect to the object Y detected in the load collapse detection range E, the load collapse determination unit 33 determines that the object Y is a load that has fallen due to a load collapse (S10) and performs load collapse handling processing (S11).

Examples of the load collapse handling processing include processing for stopping the automated guided vehicle 1A by means of control performed by the travel control unit 31, processing for causing the output unit 50 to sound an alarm notifying that a load collapse has occurred in the automated guided vehicle 1A by means of control performed by the output control unit 34, processing for transmitting notification information indicating that a load collapse has occurred in the automated guided vehicle 1A and the vehicle has stopped, to another automated guided vehicle or a management device.

By transmitting the notification information indicating that the load collapse has occurred in the automated guided vehicle 1A and the vehicle has stopped, to another automated guided vehicle, the other automated guided vehicle can travel by avoiding the place where the automated guided vehicle 1A has stopped when the other automated guided vehicle travels.

In addition, by transmitting the notification information indicating that a load collapse has occurred in the automated guided vehicle 1A and the vehicle has stopped, to a management device, the management device can transmit, to the apparatuses in the sheet metal processing facility, an instruction for reducing the load capacity when loads are loaded onto another automated guided vehicle thereafter, an instruction for changing packing styles of loaded loads, and the like. Due to the management device transmitting these instructions, it is possible to suppress the occurrence of a load collapse when an automated guided vehicle carries loads in the sheet metal processing facility thereafter. Further, when the management device acquires the notification information indicating that a load collapse has occurred in the automated guided vehicle 1A and the vehicle has stopped, the management device may change the execution order of processing processes in the sheet metal processing facility in anticipation of the time required for restoration.

When the automated guided vehicle 1A stops due to the load collapse handling processing or when the automated guided vehicle 1A arrives at the destination in step S7 ("YES" in S7), the operation of the automated guided vehicle 1A ends.

According to the first embodiment described above, when an object in the periphery of the traveling automated guided vehicle is detected, it is possible to identify whether the object has collapsed from loads loaded onto the automated guided vehicle or is an obstacle which is present on the travel route. It is thereby possible to accurately detect the collapse of loads loaded onto the automated guided vehicle. Further, it is possible to resume the traveling of the automated guided vehicle at an early stage by performing appropriate handling processing.

### <<Second embodiment>>

### <Configuration of automated guided vehicle 1B according to second embodiment>

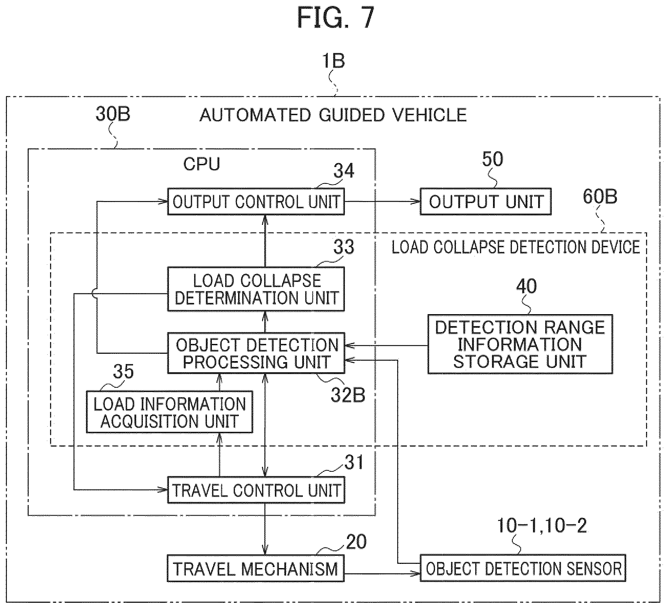

Fig. 7 is a block diagram showing the configuration of an automated guided vehicle 1B according to a second embodiment. Since the automated guided vehicle 1B has the same configuration as that of the automated guided vehicle 1A described in the first embodiment, except that a CPU 30B thereof has a load information acquisition unit 35 as a function of a load collapse detection device 60B, detailed descriptions of portions having the same functions will be omitted.

The load information acquisition unit 35 acquires information such as the size, shape, and loading position of loads loaded onto the automated guided vehicle 1B, based on information acquired by a load sensor (not shown) installed in the automated guided vehicle 1B, information input by a worker, or the like.

An object detection processing unit 32B updates information on a load collapse detection range, based on information acquired by the load information acquisition unit 35 or information on the traveling direction and the traveling speed of the automated guided vehicle 1B by means of control performed by the travel control unit 31. The object detection processing unit 32B detects objects within an updated load collapse detection range and objects within an obstacle detection range.

### <Operation of automated guided vehicle 1B according to second embodiment>

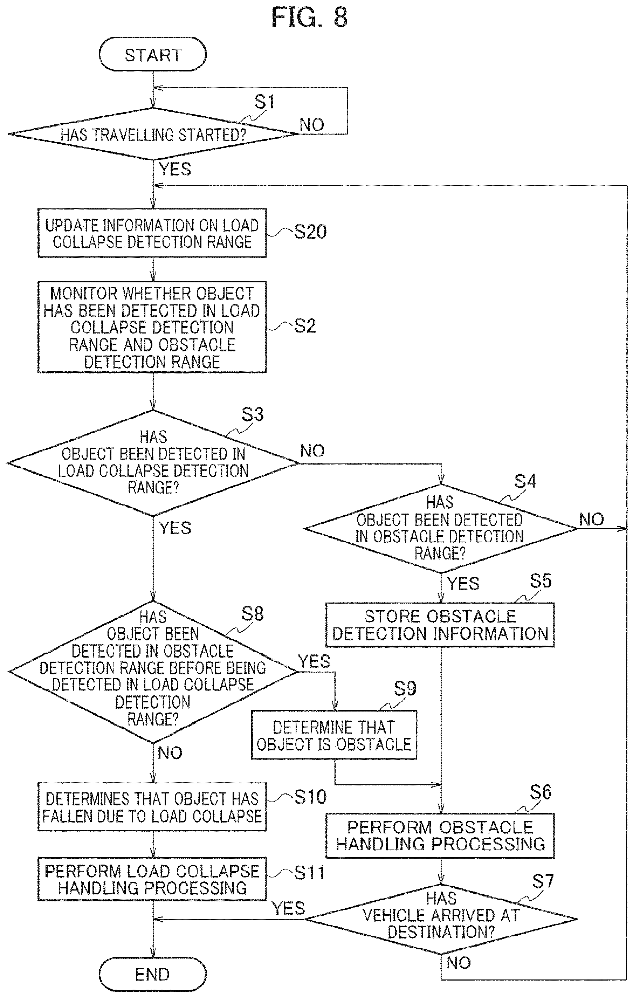

Fig. 8 is a flowchart showing the operation of the automated guided vehicle 1B according to the first embodiment. When loads are loaded onto the automated guided vehicle 1B and the vehicle starts traveling to a predetermined destination by means of a travel control unit 31 controlling a travel mechanism 20 ("YES" in S1), an object detection sensor 10-1 starts processing of detecting objects in an object detection range C1, and an object detection sensor 10-2 starts processing of detecting objects in an object detection range C2.

When the object detection sensors 10-1 and 10-2 start the processing of detecting objects, the object detection processing unit 32B acquires information on the detection results. Further, the load information acquisition unit 35 acquires information such as the size, shape, and loading position of the loads loaded onto the automated guided vehicle 1B, based on the information acquired by the load sensor installed in the automated guided vehicle 1B, information input by a worker, or the like. Still further, the load information acquisition unit 35 acquires information on the load collapse detection range E and the obstacle detection ranges F1 and F2 stored in the detection range information storage unit 40.

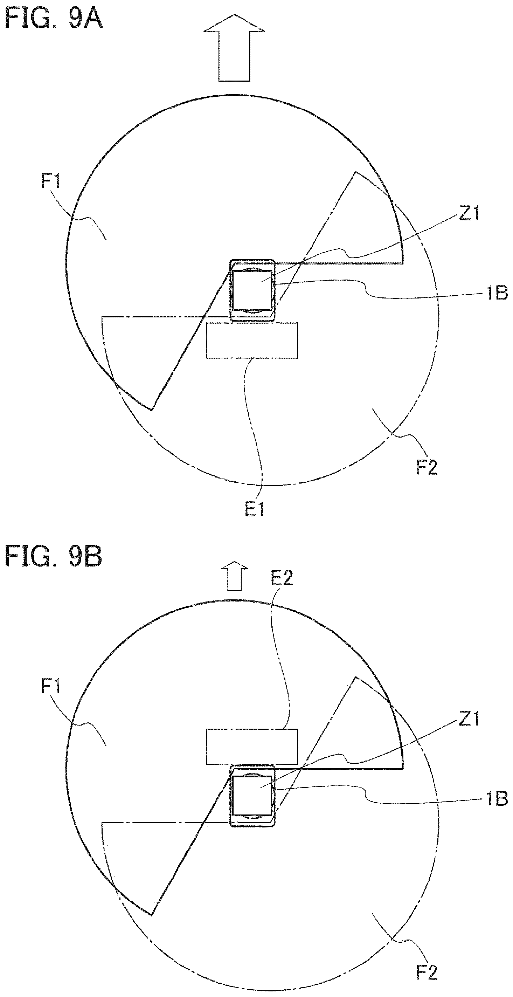

The object detection processing unit 32B updates the acquired information on the load collapse detection range E, based on the information acquired by the load information acquisition unit 35 or the information on the traveling direction and traveling speed of the automated guided vehicle 1B by means of control performed by the travel control unit 31 (S20). Specific examples of processing of updating the information on the load collapse detection range E performed by the object detection processing unit 32B will be described with reference to Figs. 9A, 9B, 10A, 10B, 11A, 11B, and 12.

Fig. 9A is a view in which the updated load collapse detection range is viewed from above when the automated guided vehicle 1B onto which a load Z1 is loaded accelerates in the front direction as shown by the arrow. When the automated guided vehicle 1B accelerates in the front direction, there is a high possibility that the load Z1 loaded onto the automated guided vehicle 1B may collapse in the rear direction. Therefore, when the automated guided vehicle 1B accelerates, the object detection processing unit 32B updates the load collapse detection range to a region E1 behind the automated guided vehicle 1B.

Fig. 9B is a view in which the updated load collapse detection range is viewed from above when the automated guided vehicle 1B onto which the load Z1 is loaded decelerates while traveling in the front direction as shown by the arrow. When the automated guided vehicle 1B decelerates while traveling, there is a high possibility that the load Z1 loaded onto the automated guided vehicle 1B may collapse in the front direction. Therefore, when the automated guided vehicle 1B decelerates, the object detection processing unit 32B updates the load collapse detection range to a region E2 in front of the automated guided vehicle 1B.

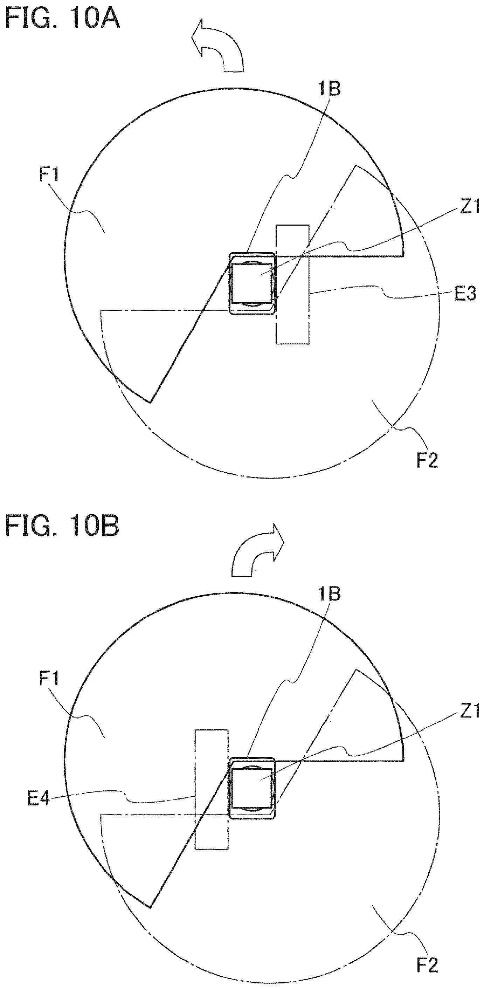

Fig. 10A is a view in which the updated load collapse detection range is viewed from above when the automated guided vehicle 1B onto which the load Z1 is loaded turns in the left direction as shown by the arrow. When the automated guided vehicle 1B turns in the left direction, there is a high possibility that the load Z1 loaded onto the automated guided vehicle 1B may collapse to the right side. Therefore, when the automated guided vehicle 1B turns in the left direction, the object detection processing unit 32B updates the load collapse detection range to a region E3 on the right side of the automated guided vehicle 1B.

Fig. 10B is a view in which the updated load collapse detection range is viewed from above when the automated guided vehicle 1B onto which the load Z1 is loaded turns in the right direction as shown by the arrow. When the automated guided vehicle 1B turns in the right direction, there is a high possibility that the load Z1 loaded onto the automated guided vehicle 1B may collapse to the left side. Therefore, when the automated guided vehicle 1B turns in the right direction, the object detection processing unit 32B updates the load collapse detection range to a region E4 on the left side of the automated guided vehicle 1B.

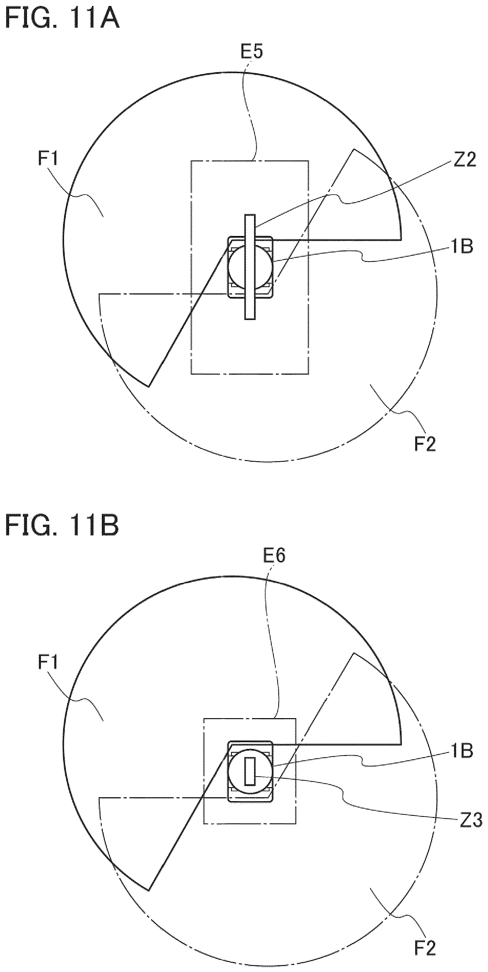

Fig. 11A is a view in which the updated load collapse detection range is viewed from above when the automated guided vehicle 1B onto which a long load Z2 is loaded is traveling. When the long load Z2 is loaded onto the automated guided vehicle 1B, the range in which the load Z2 may fall when the load collapses becomes wide. Therefore, when the long load Z2 is loaded onto the automated guided vehicle 1B, the object detection processing unit 32B updates the load collapse detection range to a wide region E5. The same applies to when a large load is loaded onto the automated guided vehicle 1B.

Fig. 11B is a view in which the updated load collapse detection range is viewed from above when the automated guided vehicle 1B onto which a small load Z3 is loaded is traveling. When the small load Z3 is loaded onto the automated guided vehicle 1B, a range in which the load Z3 may fall when the load collapses becomes narrow. Therefore, when the small load Z3 is loaded onto the automated guided vehicle 1B, the object detection processing unit 32B updates the load collapse detection range to a narrow region E6.

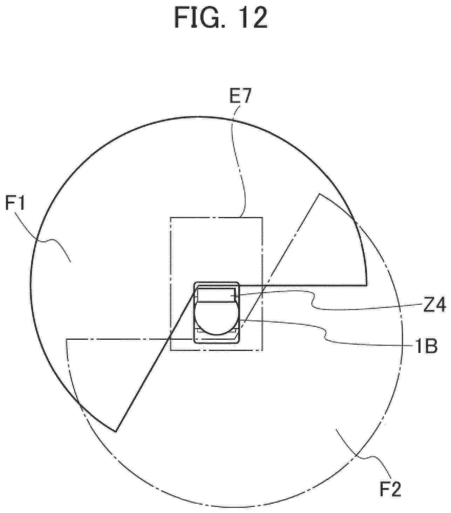

Fig. 12 is a view in which the updated load collapse detection range is viewed from above when the automated guided vehicle 1B is traveling while the center of gravity of a load Z4 loaded onto the automated guided vehicle 1B is biased in the front direction. When the automated guided vehicle 1B is travelling while the center of gravity of the load Z4 loaded onto the automated guided vehicle 1B is biased in the front direction, there is a high possibility that the load Z4 may collapse in the front direction. Therefore, in this case, the object detection processing unit 32B updates the load collapse detection range to a wide region E7 in front of the automated guided vehicle 1B. Similarly, when the center of gravity of a loaded load is biased in another direction, the load collapse detection range may be updated to a wide region in the direction where the center of gravity of the load is biased.

When the information on the load collapse detection range E is updated as described above, the object detection processing unit 32B monitors whether an object is detected within the updated load collapse detection range and the obstacle detection ranges F1 and F2 as shown in Fig. 8 (S2). Hereinafter, since processing performed in steps S3 to S11 is the same as the processing described in the first embodiment, a detailed description thereof will be omitted.

By repeating the processing of steps S2 to S11 and S20 until the automated guided vehicle 1B arrives at the destination, when the traveling state of the automated guided vehicle 1B changes, for example, when the traveling speed or traveling direction changes, the load collapse detection range is appropriately updated according to the changed traveling state.

According to the second embodiment described above, by appropriately updating the load collapse detection range according to the traveling state of the automated guided vehicle 1B, a collapse of a load loaded onto the automated guided vehicle 1B can be accurately detected while minimizing the processing load.

In the second embodiment described above, when the object detection processing unit 32B updates the information on the load collapse detection range E based on the information acquired by the load information acquisition unit 35 or the information on the traveling direction and traveling speed of the automated guided vehicle 1B, the object detection processing unit 32B may update the obstacle detection ranges F1 and F2 also to regions in a direction which is the same as that of the load collapse detection range E. By updating the obstacle detection ranges F1 and F2 also in this way, it is possible to further reduce the processing load of the load collapse detection device 60B.

In the first and second embodiments described above, a description has been given regarding a case in which the object detection sensors 10-1 and 10-2 are installed at front positions and rear positions of the automated guided vehicles 1A and 1B, and the object detection range C1 of the object detection sensor 10-1 is combined with the object detection range C2 of the object detection sensor 10-2 to set the entire periphery of the automated guided vehicles 1A and 1B as the object detection range, but the present invention is not limited thereto.

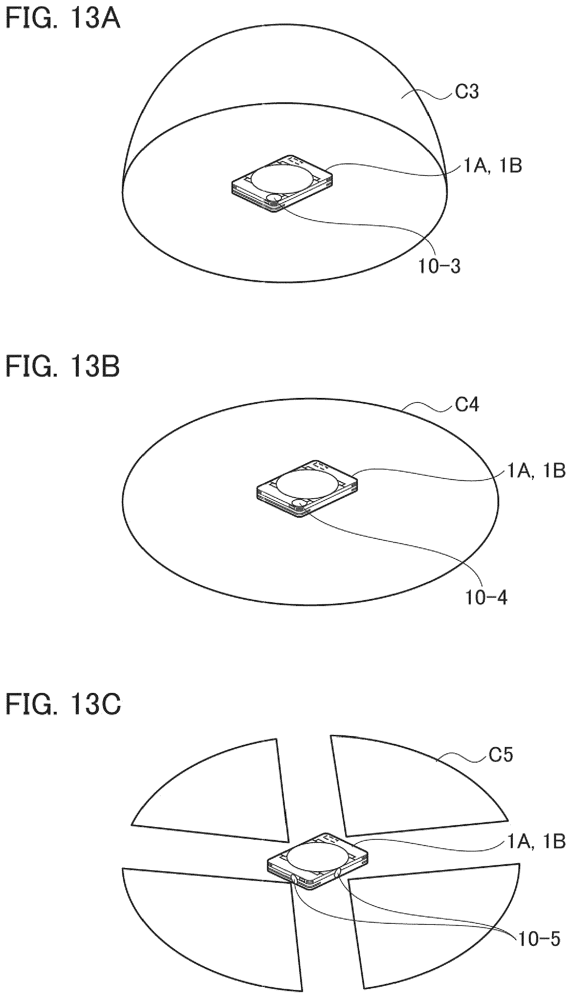

Other examples of installation positions and object detection ranges of object detection sensors will be described with reference to Figs. 13A to 13C. Fig. 13A is an explanatory diagram of a case in which an object detection sensor 10-3 constituted by 3D-LiDAR is installed at one upper end of each of the automated guided vehicles 1A and 1B, and a dome-shaped surrounding space C3 including an upper portion of each of the automated guided vehicles 1A and 1B is set as the object detection range. Fig. 13B is an explanatory diagram of a case in which an object detection sensor 10-4 which is constituted by 2D-LiDAR and can perform detection in directions in 360 degrees is installed at one upper end of each of the automated guided vehicles 1A and 1B, and a planar surrounding region C4 in all directions of each of the automated guided vehicles 1A and 1B is set as the object detection range. Fig. 13C is an explanatory diagram of a case in which object detection sensors 10-5 are installed on all four side surfaces of each of the automated guided vehicles 1A and 1B, and a region C5 spreading forward from each installation position by forming a fan-shape is set as the object detection range. As described above, the installation position and the object detection range of the object detection sensor can be appropriately changed.

The object detection sensor is not limited to a LiDAR sensor, and may be constituted by an ultrasonic sensor, a radar using radio waves, or the like.

The present invention is not limited to the embodiments herein described above and various modifications are possible.

## Claims

1. A load collapse detection device (60A) for being communicably connected to an object detection sensor (10-1, 10-2) for detecting an object in a periphery of an automated guided vehicle (1A), the load collapse detection device (60A) comprising:
a detection range information storage unit (40) configured to store information indicating a load collapse detection range adjacent to the automated guided vehicle (1A), within a detection range implemented by the object detection sensor (10-1, 10-2), and information indicating an obstacle detection range in a periphery of the load collapse detection range, within the detection range implemented by the object detection sensor (10-1, 10-2);
an object detection processing unit (32A) configured to acquire a result of detection performed by the object detection sensor (10-1, 10-2) while the automated guided vehicle (1A) is travelling, and detects an object in the load collapse detection range and in the obstacle detection range; and
a load collapse determination unit (33) configured to, when the object detection processing unit (32A) detects the object in the load collapse detection range, determine whether the object has been detected in the obstacle detection range before being detected in the load collapse detection range, determine that the object has fallen due to load collapse when the object has not been detected in the obstacle detection range before being detected in the load collapse detection range, and determine that the object has not fallen due to load collapse when the object has been detected in the obstacle detection range before being detected in the load collapse detection range.

2. The load collapse detection device (60A) in the automated guided vehicle (1A) according to claim 1, wherein the object detection processing unit (32A) is configured to update the load collapse detection range, based on a travelling state of the automated guided vehicle (1A).

3. A load collapse detection method for an automated guided vehicle (1A), in which a load collapse detection device (60A), which is communicably connected to an object detection sensor (10-1, 10-2) for detecting an object in a periphery of the automated guided vehicle (1A), performs:
storing information indicating a load collapse detection range adjacent to the automated guided vehicle (1A), within a detection range implemented by the object detection sensor (10-1, 10-2), and information indicating an obstacle detection range in a periphery of the load collapse detection range, within the detection range implemented by the object detection sensor (10-1, 10-2);
acquiring a result of detection performed by the object detection sensor (10-1, 10-2) while the automated guided vehicle (1A) is travelling, and monitoring whether the object detection sensor (10-1, 10-2) detects an object in the load collapse detection range and in the obstacle detection range; and
when the object in the load collapse detection range is detected, determining whether the object has been detected in the obstacle detection range before being detected in the load collapse detection range, determining that the object has fallen due to load collapse when the object has not been detected in the obstacle detection range before being detected in the load collapse detection range, and determining that the object has not fallen due to load collapse when the object has been detected in the obstacle detection range before being detected in the load collapse detection range.

## Patentansprüche

1. Vorrichtung (60A) für Erfassung von Ladungszusammenbruch zum kommunizierenden Verbinden mit einem Objekterfassungs-Sensor (10-1, 10-2) zum Erfassen eines Objektes in einer Peripherie eines fahrerlosen Transportfahrzeugs (1A), wobei die Vorrichtung (60A) für Erfassung von Ladungszusammenbruch umfasst:
eine Einheit (40) für Speicherung von Erfassungsbereich-Informationen, die zum Speichern von Informationen, die einen an das fahrerlose Transportfahrzeug (1A) angrenzenden Bereich für Erfassung von Ladungszusammenbruch innerhalb eines durch den Objekterfassungs-Sensor (10-1, 10-2) implementierten Erfassungsbereiches anzeigen, sowie von Informationen ausgeführt ist, die einen Bereich für Erfassung von Hindernissen in einer Peripherie des Bereiches für Erfassung von Ladungszusammenbruch innerhalb des durch den Objekterfassungs-Sensor (10-1, 10-2) implementierten Erfassungsbereiches anzeigen;
eine Einheit (32A) zum Verarbeiten von Objekterfassung, die zum Bestimmen eines Ergebnisses durch den Objekterfassungs-Sensor (10-1, 10-2) bei Fahrt des fahrerlosen Transportfahrzeugs (1A) durchgeführter Erfassung ausgeführt ist und ein Objekt in dem Bereich für Erfassung von Ladungszusammenbruch sowie in dem Bereich für Erfassung von Hindernissen erfasst; und
eine Einheit (33) für Feststellung von Ladungszusammenbruch, die so ausgeführt ist, dass sie, wenn die Einheit (32A) zum Verarbeiten von Objekterfassung das Objekt in dem Bereich für Erfassung von Ladungszusammenbruch erfasst, feststellt, ob das Objekt in dem Bereich für Erfassung von Hindernissen erfasst worden ist, bevor es in dem Bereich für Erfassung von Ladungszusammenbruch erfasst wurde, feststellt, dass das Objekt aufgrund von Ladungszusammenbruch heruntergefallen ist, wenn das Objekt nicht in dem Bereich für Erfassung von Hindernissen erfasst worden ist, bevor es in dem Bereich für Erfassung von Ladungszusammenbruch erfasst wurde, und feststellt, dass das Objekt nicht aufgrund von Ladungszusammenbruch heruntergefallen ist, wenn das Objekt in dem Bereich für Erfassung von Hindernissen erfasst worden ist, bevor es in dem Bereich für Erfassung von Ladungszusammenbruch erfasst wurde.

2. Vorrichtung (60A) für Erfassung von Ladungszusammenbruch in dem fahrerlosen Transportfahrzeug (1A) nach Anspruch 1, wobei die Einheit (32A) zum Verarbeiten von Objekterfassung, so ausgeführt ist, dass sie den Bereich für Erfassung von Ladungszusammenbruch auf Basis eines Fahrstatus des fahrerlosen Transportfahrzeugs (1A) aktualisiert.

3. Verfahren für Erfassung von Ladungszusammenbruch für ein fahrerloses Transportfahrzeug (1A), bei dem eine Vorrichtung (60A) für Erfassung von Ladungszusammenbruch, die kommunizierend mit einem Objekterfassungs-Sensor (10-1, 10-2) zum Erfassen eines Objektes in einer Peripherie des fahrerlosen Transportfahrzeugs (1A) verbunden ist, durchführt:
Speichern von Erfassungsbereich-Informationen, die einen an das fahrerlose Transportfahrzeug (1A) angrenzenden Bereich für Erfassung von Ladungszusammenbruch innerhalb eines durch den Objekterfassungs-Sensor (10-1, 10-2) implementierten Erfassungsbereiches anzeigen, sowie von Informationen, die einen Bereich für Erfassung von Hindernissen in einer Peripherie des Bereiches für Erfassung von Ladungszusammenbruch innerhalb des durch den Objekterfassungs-Sensor (10-1, 10-2) implementierten Erfassungsbereiches anzeigen;
Bestimmen eines Ergebnisses durch den Objekterfassungs-Sensor (10-1, 10-2) bei Fahrt des fahrerlosen Transportfahrzeugs (1A) durchgeführter Erfassung und Überwachen, ob der Objekterfassungs-Sensor (10-1, 10-2) ein Objekt in dem Bereich für Erfassung von Ladungszusammenbruch sowie in dem Bereich für Erfassung von Hindernissen erfasst; und
wenn das Objekt in dem Bereich für Erfassung von Ladungszusammenbruch erfasst wird, Feststellen, ob das Objekt in dem Bereich für Erfassung von Hindernissen erfasst worden ist, bevor es in dem Bereich für Erfassung von Ladungszusammenbruch erfasst wurde, Feststellen, dass das Objekt aufgrund von Ladungszusammenbruch heruntergefallen ist, wenn das Objekt nicht in dem Bereich für Erfassung von Hindernissen erfasst worden ist, bevor es in dem Bereich für Erfassung von Ladungszusammenbruch erfasst wurde, und Feststellen, dass das Objekt nicht aufgrund von Ladungszusammenbruch heruntergefallen ist, wenn das Objekt in dem Bereich für Erfassung von Hindernissen erfasst worden ist, bevor es in dem Bereich für Erfassung von Ladungszusammenbruch erfasst wurde.

## Revendications

1. Dispositif de détection d'effondrement de charge (60A) destiné à être connecté de manière communicable à un capteur de détection d'objet (10-1, 10-2) pour détecter un objet dans une périphérie d'un véhicule guidé automatisé (1A), le dispositif de détection d'effondrement de charge (60A) comprenant :
une unité de stockage d'informations de plage de détection (40) configurée pour stocker des informations indiquant une plage de détection d'effondrement de charge adjacente au véhicule guidé automatisé (1A), dans une plage de détection mise en œuvre par le capteur de détection d'objet (10-1, 10-2), et des informations indiquant une plage de détection d'obstacle dans une périphérie de la plage de détection d'effondrement de charge, dans la plage de détection mise en œuvre par le capteur de détection d'objet (10-1, 10-2) ;
une unité de traitement de détection d'objet (32A) configurée pour acquérir un résultat de détection effectué par le capteur de détection d'objet (10-1, 10-2) pendant que le véhicule guidé automatisé (1A) se déplace, et détecte un objet dans la zone de détection d'effondrement de la charge et dans la zone de détection d'obstacle ; et
une unité de détermination d'effondrement de charge (33) configurée pour, lorsque l'unité de traitement de détection d'objet (32A) détecte l'objet dans la plage de détection d'effondrement de charge, déterminer si l'objet a été détecté dans la plage de détection d'obstacle avant d'être détecté dans la plage de détection d'effondrement de charge, déterminer que l'objet est tombé en raison d'un effondrement de charge lorsque l'objet n'a pas été détecté dans la plage de détection d'obstacle avant d'être détecté dans la plage de détection d'effondrement de charge, et déterminer que l'objet n'est pas tombé en raison d'un effondrement de charge lorsque l'objet a été détecté dans la plage de détection d'obstacle avant d'être détecté dans la plage de détection d'effondrement de charge.

2. Dispositif de détection d'effondrement de charge (60A) dans le véhicule guidé automatisé (1A) selon la revendication 1, dans lequel l'unité de traitement de détection d'objet (32A) est configurée pour mettre à jour la plage de détection d'effondrement de charge, en fonction d'un état de déplacement du véhicule guidé automatisé (1A).

3. Procédé de détection d'effondrement de charge pour un véhicule guidé automatisé (1A), dans lequel un dispositif de détection d'effondrement de charge (60A), qui est connecté de manière communicable à un capteur de détection d'objet (10-1, 10-2) pour détecter un objet dans une périphérie du véhicule guidé automatisé (1A), effectue :
stocker des informations indiquant une plage de détection d'effondrement de charge adjacente au véhicule guidé automatisé (1A), dans une plage de détection mise en œuvre par le capteur de détection d'objet (10-1, 10-2), et des informations indiquant une plage de détection d'obstacle dans une périphérie de la plage de détection d'effondrement de charge, dans la plage de détection mise en œuvre par le capteur de détection d'objet (10-1, 10-2) ;
acquérir un résultat de détection effectué par le capteur de détection d'objet (10-1, 10-2) pendant que le véhicule guidé automatisé (1A) se déplace, et contrôler si le capteur de détection d'objet (10-1, 10-2) détecte un objet dans la zone de détection d'effondrement de la charge et dans la zone de détection d'obstacle ; et
lorsque l'objet dans la plage de détection d'effondrement de charge est détecté, déterminer si l'objet a été détecté dans la plage de détection d'obstacle avant d'être détecté dans la plage de détection d'effondrement de charge, déterminer que l'objet est tombé en raison d'un effondrement de charge lorsque l'objet n'a pas été détecté dans la plage de détection d'obstacle avant d'être détecté dans la plage de détection d'effondrement de charge, et déterminer que l'objet n'est pas tombé en raison d'un effondrement de charge lorsque l'objet a été détecté dans la plage de détection d'obstacle avant d'être détecté dans la plage de détection d'effondrement de charge.
